# FASCICULE DE BREVET EUROPEEN

(11) **EP 1 072 823 B1**
(45) Date de publication et mention de la délivrance du brevet: **26.05.2004**
(21) Numéro de dépôt: 00401722.4
(22) Date de dépôt: 16.06.2000
(51) Int. Cl.: F16H 63/18

(54) **Tambour sélecteur de vitesses pour boîte de vitesses multiples de véhicules automobiles**
Schaltwalze eines mehrgängigen Wechselgetriebes für Kraftfahrzeuge
Gear shifting drum of a multi-ratio change-speed gearbox for automotive vehicles

(30) Priorité: 22.07.1999 FR 9909502; 22.07.1999 FR 9909504
(43) Date de publication de la demande: 31.01.2001
(73) Titulaire: Peugeot Citroen Automobiles SA, 92200 Neuilly sur Seine (FR)
(72) Inventeur: Pelletier, Laurent, 95000 Cergy St. Christophe (FR); Lelasseux, Xavier, 92150 Suresnes (FR)
(74) Mandataire: Seytre, Françoise

(56) Documents cités:
- EP-A- 0 741 258
- WO-A-81/00313
- DE-A- 19 528 460
- DE-C- 950 433
- FR-A- 2 639 415
- US-A- 5 868 641

## Description

La présente invention concerne un dispositif de commande interne de changement de vitesse pour boîte de vitesses mécanique d'un véhicule automobile selon le préambule de la revendication 1 connu par EP-A-741 258.

Elle se rapporte plus particulièrement à un dispositif de commande ou de pilotage interne du changement de vitesse du type désigné à barillet ou à cylindre à cames pour boîte de vitesses destiné à permettre le passage des vitesses de manière séquentielle, c'est-à-dire en montant chaque rapport dans leur ordre numérique ou en descendant les rapports de vitesses déjà engagés dans leur ordre numérique inverse.

On connaît déjà un dispositif de commande interne à barillet de changement de vitesses pour boîte de vitesses mécanique qui est constitué d'un cylindre ou tambour comportant une rampe pour chaque fourchette afin de déplacer alternativement dans le sens axial ces dernières. Chacune des fourchettes est montée coulissante sur un axe unique et coopère d'une part avec un organe d'actionnement d'un synchroniseur de marche avant destiné à engager le rapport désiré et d'autre part avec la rampe associée par l'intermédiaire d'un carré mâle qui reçoit une pièce de frottement en forme de cylindre venant s'inscrire dans la rampe. Le tambour est entraîné en rotation dans un sens ou dans l'autre par l'intermédiaire d'un moteur électrique fixé au carter de boîte de vitesses.

L'invention a pour but de proposer un autre dispositif que celui décrit ci-dessus qui soit plus compact et simple de réalisation et de fonctionnement.

A cet effet, l'invention a pour objet un dispositif de commande interne de changement de vitesse pour boîte de vitesses mécanique d'un véhicule automobile, selon les caractéristiques de la revendication 1.

Avec une telle configuration, on assure un bon rendement de la liaison avec le doigt et il n'y a pas trop d'effort de rotation de la fourchette important.

Selon une première variante, le cylindre est muni d'au moins deux rampes dont chacune coopère avec un unique doigt.

Avantageusement et selon cette première variante, le doigt est constitué d'une goupille pourvu à son extrémité libre d'un galet.

Selon une deuxième variante, le cylindre est muni d'un unique rampe qui coopère avec plusieurs doigts.

Suivant quelques dispositions intéressantes de cette deuxième variante :
- les doigts de commande des organes d'engagements sont répartis angulairement autour du cylindre de manière à assurer que les fourchettes soient à tout moment positionnées soit en position point mort ou enclenchées sur un rapport unique,
- le cylindre constitué de deux parties distinctes et séparables forme une fois assemblées ladite rainure aux flancs parallèles et agencée sur son pourtour.
- le cylindre est pourvu de ladite rampe saillante du diamètre de ce dernier et agencée sur le pourtour du cylindre,
- les doigts de chacun des organes d'engagement sont constitués d'une pièce présentant la forme générale d'un « U » dont les branches sont arrondies dans leur partie interne,
- le cylindre est réalisé soit par frittage, soit par moulage.

Avantageusement et selon l'invention, le moyen d'entraînement en rotation de l'arbre de commande est constitué d'un moteur électrique du type pas à pas qui engrène avec un pignon solidaire de l'arbre de commande.

Les caractéristiques de l'invention mentionnées ci-dessus, ainsi que d'autres, apparaîtront plus clairement à la lecture de la description suivante de deux exemples de réalisation, en se référant aux dessins annexés sur lesquels :
- la figure 1 est une vue partielle du dispositif de commande interne de changement de vitesse pour une boite de vitesses selon une première variante de l'invention,
- la figure 2 est une vue partielle du dispositif de commande interne de changement de vitesse pour une boite de vitesses selon une deuxième variante de l'invention,
- la figure 3 est une vue similaire à la figure 2 selon un autre mode de réalisation,
- la figure 4 est une vue partielle en coupe selon III-III de la figure 3, et
- la figure 5 est une vue en perspective d'une variante de réalisation du cylindre du dispositif de commande selon l'invention.

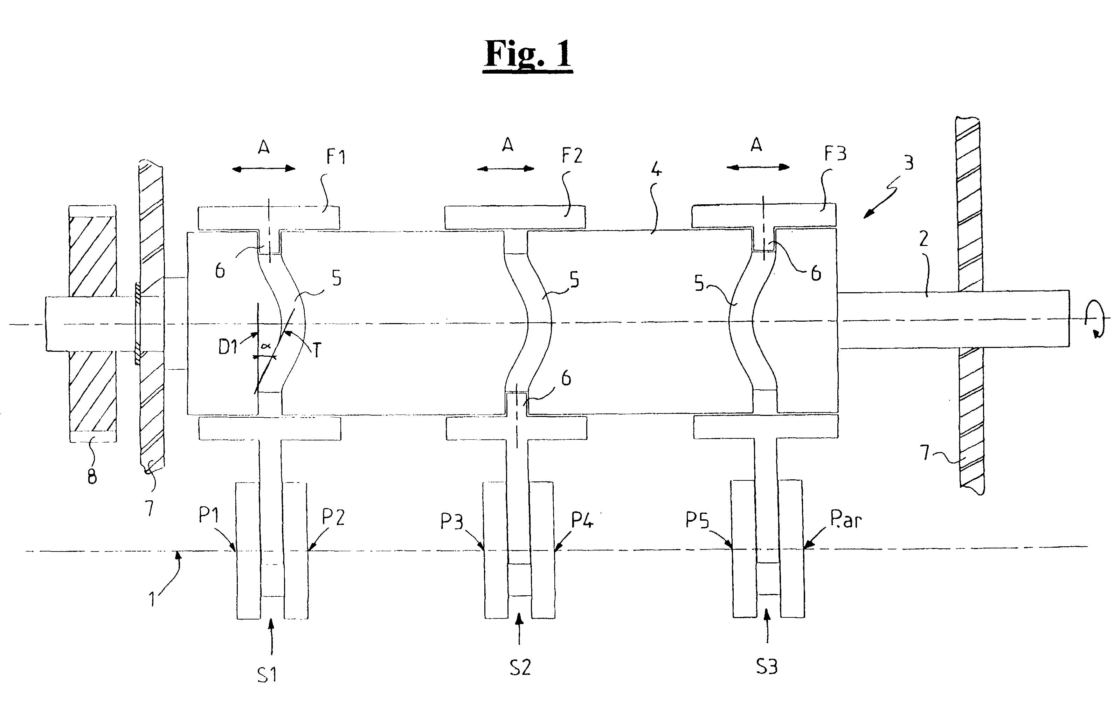

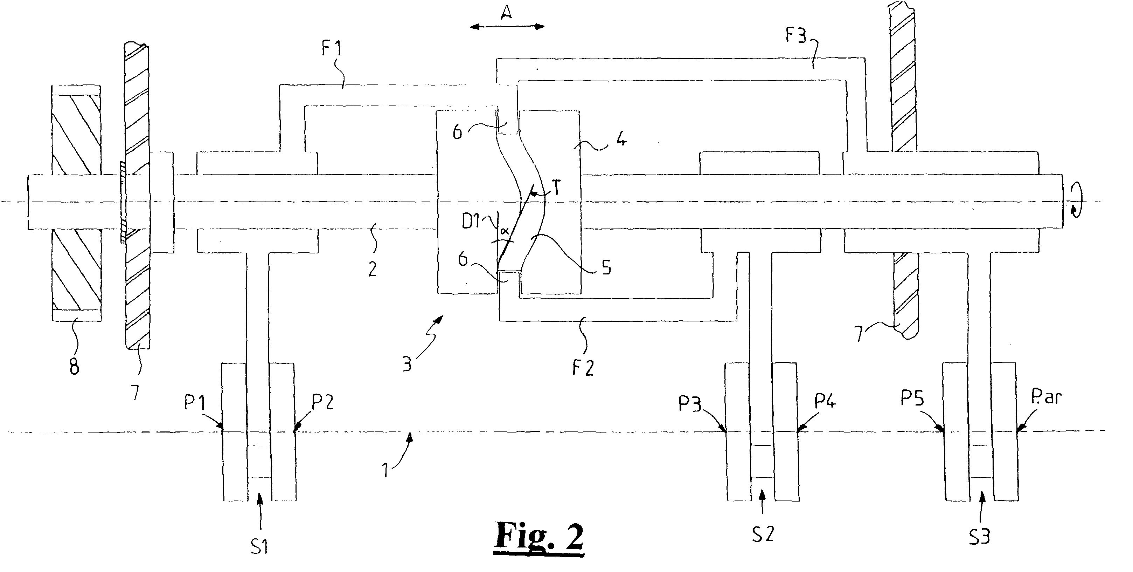

Par souci de clarté, la description détaillée qui suit est faite tout d'abord pour la première variante (figure 1) puis pour la deuxième variante ( figures 2 à 5).

On a représenté sur la figure 1 l'axe géométrique, désigné par la référence générale 1, de l'arbre primaire ou arbre d'entrée d'une boite de vitesses mécanique sur lequel sont montés des organes d'actionnement S1, S2 et S3 d'un synchroniseur ou de crabots de marche avant et/ou de marche arrière.

Dans notre mode de réalisation, l'arbre primaire est pourvu de trois organes d'actionnement S1, S2 et S3 d'un synchroniseur correspondant respectivement en considérant la figure et de gauche à droite, au synchroniseur du rapport de la première P1 et seconde P2 vitesse, du rapport de troisième P3 et de quatrième P4 vitesse et du rapport de cinquième P5 et de marche arrière P.ar.

Chacun de ces trois organes d'actionnement S1, S2 et S3 d'un synchroniseur est associé à un organe d'engagement d'un rapport ou fourchette, désigné respectivement F1, F2 et F3, qui est apte à se déplacer dans un sens axial, représenté par la flèche A, sur un arbre parallèle 2 et déporté par rapport à l'arbre primaire. Le déplacement suivant le sens axial des organes d'engagement F1, F2 et F3 d'un rapport est réalisé par l'intermédiaire d'un dispositif interne 3 du type à cylindre ou barillet 4 sur lequel sont agencées des rampes 5.

Selon la présente invention, ce dispositif interne 3 de commande de changement de rapport de vitesse est solidaire de l'arbre 2 qui porte les organes d'engagement des rapports, désigné dans la suite de la description arbre de commande 2.

Comme visible sur la figure unique, chacun des organes d'engagement F1, F2 et F3 des rapports est monté coaxialement coulissant sur le cylindre ou barillet 4 de commande.

Le déplacement dans le sens axial sur l'arbre de commande 2 de chacun des organes d'engagement F1, F2 et F3 des rapports est réalisé par l'intermédiaire d'une rampe 5 ou rainure agencée sur le pourtour du cylindre 4 dans laquelle coulisse au moins un doigt 6 ou une forme complémentaire à la rampe qui est solidaire de chacun des organes d'engagement F1, F2 et F3.

Les rampes 5 sont réalisées sur le cylindre 4 de telle sorte que l'angle α formé entre une droite perpendiculaire à l'arbre de commande 2 et la tangente passant par le rayon de courbure de la rampe forme un angle compris entre 20 et 64 degrés, de préférence un angle inférieur à 45 degrés afin d'assurer un bon rendement de la liaison avec le doigt et ne pas générer d'effort de rotation de la fourchette important.

Dans notre mode de réalisation, le doigt 6 est constitué d'une goupille qui peut avantageusement à son extrémité libre qui coopère avec la rainure être pourvu d'un galet, non représenté, minimisant ainsi les frottements.

L'arbre de commande 2 est monté en rotation dans le carter de la boîte de vitesses désigné par la référence générale 7 et est muni à l'une de ses extrémités libres d'un moyen d'entraînement en rotation. Ce moyen d'entraînement en rotation est constitué d'un pignon 8 solidaire de l'arbre de commande 2 qui engrène, par exemple, avec une cascade de pignon non représenté, reliée à un moteur électrique du type pas à pas, également non représenté. Ce moteur électrique est avantageusement fixé au carter 7 de boîte de vitesses.

Selon une mode de réalisation, ce moteur électrique peut être remplacé par un moyen mécanique du type à cliquet bien connu de l'homme du métier.

Le fonctionnement du dispositif de la présente invention découle de la description ci-dessus.

En effet, on comprend que lors de la mise en rotation de l'arbre de commande 2 par le moteur électrique ceci entraîne en rotation le cylindre 4 et par voie de conséquence le déplacement axial d'un des organes d'engagement F1 ou F2 ou F3 d'un rapport par l'intermédiaire de la coopération de la rampe 5 ou rainure avec le doigt 6 solidaire de la fourchette. Le déplacement de la fourchette entraîne préalablement la mise en friction des éléments de l'organe de synchronisation S1 ou S2 ou S3 puis le passage du rapport.

Avantageusement, on notera qu'un tour complet de rotation du barillet 4 permet de commander successivement en translation tous les organes d'engagement F1, F2 et F3 des rapports et donc d'engager successivement tous les rapports dans leur ordre numérique à savoir du point mort au rapport P1, P2, P3, P4 et P5 ou du point mort au rapport P.ar. Ainsi, les fourchettes sont à tout moment positionnées soit en position point mort, tel que représenté sur la figure unique, ou enclenchées sur un rapport unique. Un tel agencement du dispositif assure qu'un seul rapport sera engagé à la fois.

Selon une variante, chacune des rampes ou rainures ou encore l'une des rampes seulement, agencées sur le pourtour du cylindre peut ne pas constituer un anneau, comme dans le mode de réalisation décrit, mais une hélice avec deux extrémités ceci dans le but d'adapter les différents types d'organes de synchronisation.

On a représenté à la figure 2, l'axe géométrique, désigné par la référence générale 1, d'un des arbres primaire ou secondaire d'une boite de vitesses mécanique sur lequel sont montés des organes d'actionnement S1, S2 et S3 d'un synchroniseur ou de crabots de marche avant et/ou de marche arrière.

Dans notre mode de réalisation, l'arbre secondaire est pourvu de trois organes d'actionnement S1, S2 et S3 d'un synchroniseur ou de crabots correspondant respectivement en considérant la figure et de gauche à droite, au synchroniseur du rapport de la première P1 et seconde P2 vitesse, du rapport de troisième P3 et de quatrième P4 vitesse et du rapport de cinquième P5 et de marche arrière P.ar.

Chacun de ces trois organes d'actionnement S1, S2 et S3 d'un synchroniseur est associé à un organe d'engagement d'un rapport ou fourchette, désigné respectivement F1, F2 et F3, qui est apte à se déplacer dans un sens axial, représenté par la flèche A, sur un arbre parallèle 2 et déporté par rapport à l'arbre primaire. Le déplacement suivant le sens axial des organes d'engagement F1, F2 et F3 d'un rapport est réalisé par l'intermédiaire d'un dispositif interne 3 du type à cylindre ou barillet 4 sur lequel est agencée une rampe 5.

Selon la présente invention, ce dispositif interne 3 de commande de changement de rapport de vitesse est solidaire de l'arbre 2 qui porte les organes d'engagement F1, F2 et F3 des rapports, désigné dans la suite de la description arbre de commande 2.

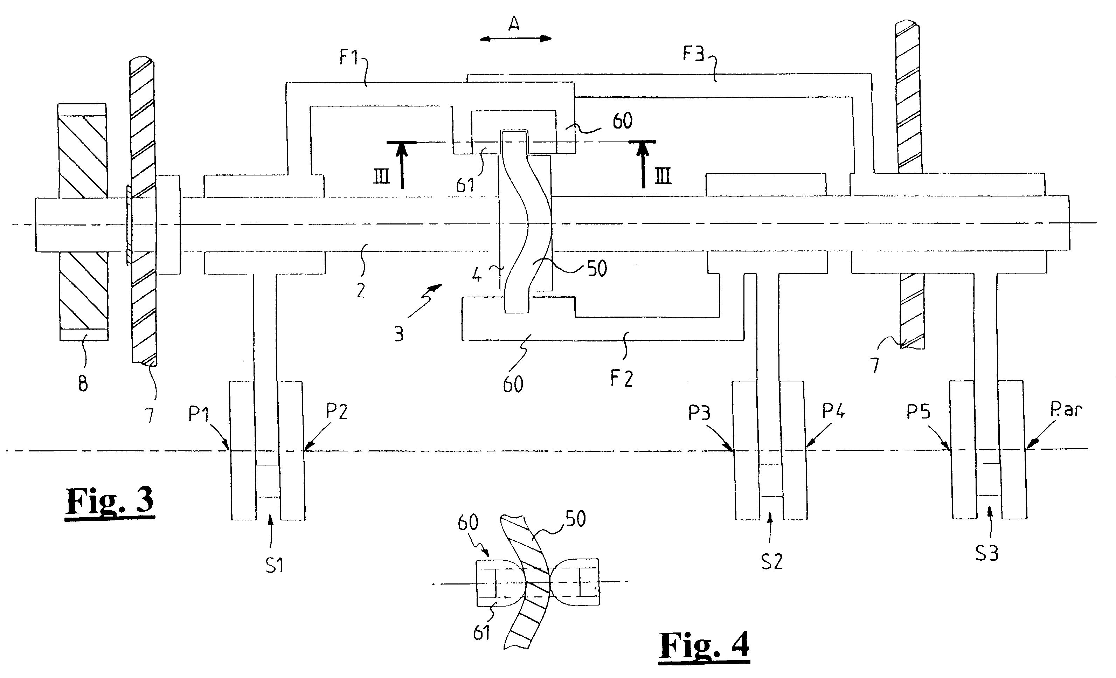

Comme visible sur la figure 3, chacun des organes d'engagement F1, F2 et F3 des rapports est monté coaxialement coulissant sur l'arbre de commande 2.

Comme mentionné ci-dessus, le déplacement dans le sens axial sur l'arbre de commande 2 de chacun des organes d'engagement F1, F2 et F3 des rapports est réalisé par l'intermédiaire du dispositif interne 3 qui comporte un cylindre ou barillet 4, porté par l'arbre de commande 2, sur lequel est aménagée une seule rampe 5 ou rainure agencée sur le pourtour du cylindre 4 dans laquelle coulisse des doigts 6 ou une forme complémentaire à la rampe qui sont solidaires respectivement de chacun des organes d'engagement F1, F2 et F3. La rotation du cylindre 4 commande ainsi successivement en translation les fourchettes.

Les doigts de commande 6 des organes d'engagements ou fourchettes F1, F2, F3 sont répartis angulairement autour du cylindre 4 de manière à assurer que les fourchettes soient à tout moment positionnées soit en position point mort ou enclenchées sur un rapport unique.

La rampe 5 est réalisée sur le cylindre 4 de telle sorte que l'angle α formé entre une droite D1 perpendiculaire à l'arbre de commande 2 et la tangente T passant par le rayon de courbure de la rampe forme un angle compris entre 20 et 64 degrés, de préférence un angle inférieur à 45 degrés afin d'assurer un bon rendement de la liaison avec le doigt et ne pas générer d'effort de rotation de la fourchette important.

L'arbre de commande 2 est monté en rotation dans le carter de la boîte de vitesses désigné par la référence générale 7 et est muni à l'une de ses extrémités libres d'un moyen d'entraînement en rotation. Ce moyen d'entraînement en rotation est constitué d'un pignon 8 solidaire de l'arbre de commande 2 qui engrène, par exemple, avec une cascade de pignon non représentée, reliée à un moteur électrique du type pas à pas, également non représenté. Ce moteur électrique est avantageusement fixé au carter 7 de boîte de vitesses.

Selon une mode de réalisation, ce moteur électrique peut être remplacé par un moyen mécanique du type à cliquet bien connu de l'homme du métier.

Le fonctionnement du dispositif de la présente invention découle de la description ci-dessus.

En effet, on comprend que lors de la mise en rotation de l'arbre de commande 2 par le moteur électrique ceci entraîne en rotation le cylindre 4 et par voie de conséquence le déplacement axial d'un des organes d'engagement F1 ou F2 ou F3 d'un rapport par l'intermédiaire de la coopération de la rampe 5 ou rainure avec l'un des doigts 6 solidaire des fourchettes. Le déplacement de la fourchette entraîne préalablement la mise en friction des éléments de l'organe de synchronisation S1 ou S2 ou S3 puis le passage du rapport.

Avantageusement, on notera qu'un tour complet de rotation du barillet 4 permet de commander successivement en translation tous les organes d'engagement F1, F2 et F3 des rapports et donc d'engager successivement tous les rapports dans leur ordre numérique à savoir du point mort au rapport P1, P2, P3, P4 et P5 ou du point mort au rapport P.ar. Ainsi, les fourchettes sont à tout moment positionnées soit en position point mort, tel que représenté sur la figure 1, ou enclenchées sur un rapport unique. Un tel agencement du dispositif assure qu'un seul rapport sera engagé à la fois.

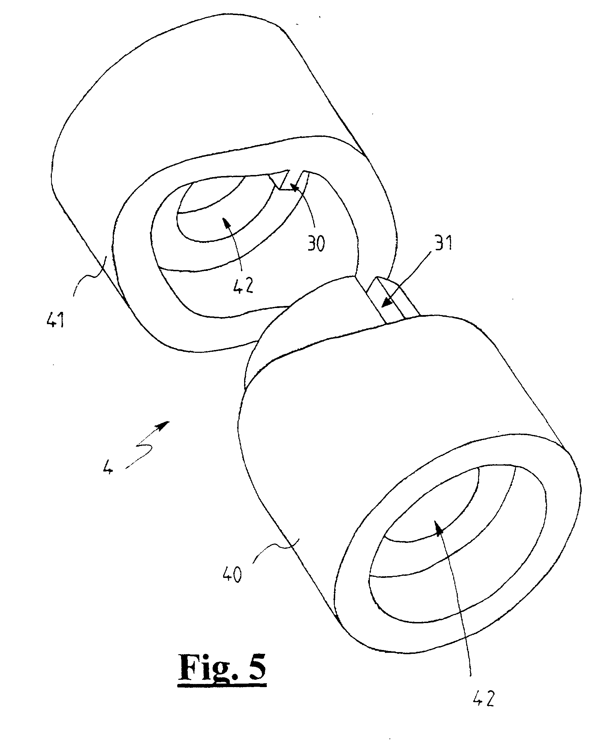

On a représenté à la figure 5, une représentation à plus grande échelle et en perspective d'un cylindre ou barillet 4 qui est constitué de deux parties distinctes et séparables, désignées par les références générales 40 et 41.

Chacune des parties 40 et 41 est réalisée par exemple par moulage ou frittage et est munie d'un orifice central 42 destiné à recevoir l'arbre de commande 2. Les deux parties 41 et 42 sont accouplées l'une à l'autre par le mécanisme d'un jeu de forme complémentaire, partie femelle 41 et partie mâle 40, comme visible sur la figure 4. Afin d'assurer le parallélisme et l'égalité des distances entre les deux parties sur leur pourtour, un indexage angulaire de l'une des parties par rapport à l'autre est réalisé par l'intermédiaire d'au moins un ergot 30 solidaire de l'une de la partie femelle destiné à s'engager dans une rainure 31 longitudinale réalisée sur la partie male.

Les parties 40 et 41 forment une fois assemblées une rainure 5 aux flancs parallèles

On a représenté à la figure 3, une variante de réalisation du dispositif selon la présente invention. Afin de faciliter la compréhension et la description les pièces identiques portent les mêmes références numériques.

Dans cette variante de réalisation, le cylindre 4 est pourvue d'une rampe 50 qui fait saillie par rapport au diamètre du cylindre 4 sur le pourtour de ce dernier. Les doigts 60 de chacun des organes d'engagement sont alors constitués d'une pièce 61 présentant la forme générale d'un « U » dont les branches sont arrondies dans leur partie interne, comme visible à la figure 3, afin d'assurer un contact permanent avec la rampe 50 en position de fonctionnement.

On notera que de manière avantageuse, la rampe peut être obtenue aisément soit par moulage soit par frittage. Dans ce dernier cas, la pièce 61 formant doigt est réalisé également en fritté et est rapporté sur la fourchette afin de garantir un bon rendement de la liaison.

Le fonctionnement est identique à celui décrit ci-dessus.

On comprend à la lecture de la description ci-dessus que la présente invention permet par rapport à l'art antérieur d'avoir un bon rendement mécanique par le nombre de pièces réduit, d'être également compacte et simple à réaliser.

## Revendications

1. Dispositif de commande interne de changement de vitesse pour boîte de vitesses mécanique d'un véhicule automobile,
constitué d'un cylindre (4) solidaire d'un arbre de commande (2) mis en rotation par des moyens d'entraînements (8),
ledit cylindre (4) étant muni d'au moins une rampe ou rainure (5) agencée sur son pourtour dans laquelle coulisse au moins un doigt (6) ou une forme complémentaire à la rampe (5) solidaire d'un organe d'engagement (F1 ;F2 ;F3) d'au moins un rapport afin de déplacer alternativement et successivement dans le sens axial ce dernier qui coopère avec des organes d'actionnement d'un synchroniseur (S1 ;S2 ; S3) ou de crabots,
ledit organe d'engagement (F1 ;F2 ;F3) étant monté coaxialement coulissant sur le cylindre (4),
ladite rampe (5) étant réalisée sur le cylindre (4) de telle sorte que l'angle α formé en tout point de la rampe entre le plan perpendiculaire à l'arbre de commande (2) passant par ce point et la tangente (T) à la rampe en ce point est un angle compris entre 0 et 64 degrés, de préférence un angle inférieur à 45 degrés,
le cylindre étant constitué par deux parties accouplées (41,42) ayant un indexage angulaire,
**caractérisé en ce que**
les deux parties (41,42) sont accouplées l'une à l'autre à l'aide d'une partie mâle cylindrique sur la première partie (42) et d'une partie complémentaire sur l'autre partie (41), l'indexage angulaire de l'une des parties par rapport à l'autre étant réalisé par l'intermédiaire d'au moins un ergot (30) solidaire de la partie femelle (41) destiné à s'engager dans une rainure (31) longitudinale réalisée sur la partie mâle (40).

2. Dispositif selon la revendication 1, **caractérisé en ce que** le cylindre est muni d'au moins deux rampes (5) dont chacune coopère avec un unique doigt (6).

3. Dispositif selon la revendication 2, **caractérisé en ce que** le doigt (6) est constitué d'une goupille pourvu à son extrémité libre d'un galet.

4. Dispositif selon la revendication 1, **caractérisé en ce que** les doigts (6) de commande des organes d'engagements sont répartis angulairement autour du cylindre (4) de manière à assurer que les fourchettes soient à tout moment positionnées soit en position point mort ou enclenchées sur un rapport unique.

5. Dispositif selon la revendication 4, **caractérisé en ce que** le cylindre constitué de deux parties distinctes et séparables forme une fois assemblées ladite rainure (5) aux flancs parallèles et agencée sur son pourtour.

6. Dispositif selon la revendication 4 , **caractérisé en ce que** le cylindre est pourvu de ladite rampe saillante du diamètre de ce dernier et agencée sur le pourtour du cylindre.

7. Dispositif selon la revendication 6, **caractérisé en ce que** les doigts de chacun des organes d'engagement sont constitués d'une pièce présentant la forme générale d'un « U » dont les branches sont arrondies dans leur partie interne,

8. Dispositif selon l'une des revendications précédentes **caractérisé en ce que** le cylindre est réalisé soit par frittage, soit par moulage.

9. Dispositif selon l'une quelconque des revendications précédentes, **caractérisé en ce que** les moyens d'entraînements en rotation de l'arbre de commande est constitué d'un moteur électrique du type pas à pas qui engrène avec un pignon (8) solidaire de l'arbre de commande (2).

## Patentansprüche

1. Innere Steuervorrichtung zum Gangwechseln für ein mechanisches Wechselgetriebe eines Kraftfahrzeugs, bestehend aus einem Zylinder (4), der mit einer Steuerwelle (2) fest verbunden ist, die von Antriebsmitteln (8) in Drehung versetzt wird, wobei der Zylinder (4) mit mindestens einer Rampe oder Nut (5) an seinem Umfang versehen ist, in die sich mindestens ein Finger (6) oder eine zur Rampe (5) komplementäre Form schiebt, der bzw. die mit einem Einfügeorgan (F1; F2; F3) von mindestens einem Gang fest verbunden ist, um diesen wechselweise und nacheinander in axialer Richtung zu verschieben, das mit Betätigungsorganen einer Synchronisierungseinrichtung (S1; S2; S3) oder von Klauen zusammenwirkt, wobei das Einfügeorgan (F1; F2; F3) koaxial verschiebbar am Zylinder (4) montiert ist und die Rampe (5) derart am Zylinder (4) ausgebildet ist, dass der in einem beliebigen Punkt der Rampe zwischen der zur Steuerwelle (2) senkrechten Ebene, die durch diesen Punkt verläuft, und der Tangente (T) zur Rampe in diesem Punkt gebildete Winkel α zwischen 0 und 64 Grad beträgt und vorzugsweise kleiner als 45 Grad ist, wobei der Zylinder aus zwei zusammengefügten Teilen (41, 42) mit Winkelindizierung gebildet ist, **dadurch gekennzeichnet, dass** die beiden Teile (41, 42) mithilfe eines zylindrischen Einsteckteils am ersten Teil (42) und eines komplementären Teils am anderen Teil (41) miteinander verbunden sind, wobei die Winkelindizierung des einen Teils gegenüber dem anderen mithilfe von mindestens einem mit dem Aufnahmeteil (41) fest verbundenen Vorsprung (30) erfolgt, der sich in eine Längsnut (31) am Einsteckteil (40) einfügt.

2. Vorrichtung nach Anspruch 1, **dadurch gekennzeichnet, dass** der Zylinder mit mindestens zwei Rampen (5) versehen ist, die jeweils mit einem einzigen Finger (6) zusammenwirken.

3. Vorrichtung nach Anspruch 2, **dadurch gekennzeichnet, dass** der Finger (6) aus einem Stift besteht, der an seinem freien Ende mit einer Rolle versehen ist.

4. Vorrichtung nach Anspruch 1, **dadurch gekennzeichnet, dass** die Steuerfinger (6) der Einfügeorgane winkelmäßig derart um den Zylinder (4) verteilt sind, dass die Gabeln jederzeit entweder in der Leerlaufposition positioniert oder in einen einzigen Gang eingeklinkt sind.

5. Vorrichtung nach Anspruch 4, **dadurch gekennzeichnet, dass** der aus zwei verschiedenen und trennbaren Teilen bestehende Zylinder, sobald diese zusammengefügt sind, an seinem Umfang die Nut (5) mit den parallelen Flanken bildet.

6. Vorrichtung nach Anspruch 4, **dadurch gekennzeichnet, dass** der Zylinder an seinem Umfang mit einer Rampe versehen ist, die über seinen Durchmesser vorspringt.

7. Vorrichtung nach Anspruch 6, **dadurch gekennzeichnet, dass** die Finger jedes der Einfügeorgane aus einem Teil bestehen, das die allgemeine Form eines U besitzt, dessen Arme in ihrem inneren Abschnitt abgerundet sind.

8. Vorrichtung nach einem der vorhergehenden Ansprüche, **dadurch gekennzeichnet, dass** der Zylinder entweder durch Sintern oder durch Formen hergestellt wird.

9. Vorrichtung nach einem der vorhergehenden Ansprüche, **dadurch gekennzeichnet, dass** die Drehantriebsmittel der Steuerwelle aus einem Elektromotor von der Art eines Schrittmotors bestehen, der in ein Ritzel (8) eingreift, das mit der Steuerwelle (2) fest verbunden ist.

## Claims

1. Internal gear-change control device for a mechanical gear box of a motor vehicle,
constituted by a cylinder (4) integral with a drive shaft (2) set in rotation by drive means (8),
said cylinder (4) being provided with at least one ramp or groove (5) arranged on its periphery in which there slides at least one finger (6) or one form complementary to the ramp (5) integral with a body (F1; F2; F3) for engaging at least one ratio in order to displace the latter alternately and successively in the axial direction, which latter co-operates with bodies for actuating a synchroniser (S1; S2; S3) or dog clutches,
said engagement body (F1; F2; F3) being mounted coaxially so as to slide over the cylinder (4)
said ramp (5) being produced on the cylinder (4) in such a way that the angle α formed at any point on the ramp between the plane perpendicular to the drive shaft (2) passing through this point and the tangent (T) to the ramp at this point is an angle of between 0 and 64 degrees, preferably an angle of less than 45 degrees.
the cylinder being constituted by two coupled parts (41, 42) having angular indexing,
**characterised in that**
the two parts (41, 42) are coupled to each other using a cylindrical male part on the first part (42) and a complementary part on the other part (41), the angular indexing of one of the parts to the other being produced via at least one lug (30) integral with the female part (41) intended to be engaged in a longitudinal groove (31) produced on the male part (40).

2. Device according to Claim 1, **characterised in that** the cylinder is provided with at least two ramps (5), each of which co-operates with a single finger (6).

3. Device according to Claim 2, **characterised in that** the finger (6) is constituted by a pin provided at its free end with a roller.

4. Device according to Claim 1, **characterised in that** the control fingers (6) of the engagement bodies are angularly distributed about the cylinder (4) so as to ensure that the forks are at all times positioned in dead centre position or engaged on a single ratio.

5. Device according to Claim 4, **characterised in that** the cylinder constituted by two distinct and separable parts forms, once assembled, said groove (5) with parallel sides and arranged on its periphery.

6. Device according to Claim 4, **characterised in that** the cylinder is provided with said ramp projecting from the diameter of the latter and arranged on the periphery of the cylinder.

7. Device according to Claim 7, **characterised in that** the fingers of each of the engagement bodies are constituted by a generally U-shaped part, the branches of which are rounded in their inner portion,

8. Device according to one of the preceding claims, **characterised in that** the cylinder is produced either by sintering or by moulding.

9. Device according to any one of the preceding claims, **characterised in that** the means for driving the drive shaft in rotation is constituted by an electric motor of the stepper type, which meshes with a pinion (8) integral with the drive shaft (2).
